# EUROPÄISCHE PATENTSCHRIFT

(11) **EP 2 946 846 B1**
(45) Veröffentlichungstag und Bekanntmachung des Hinweises auf die Patenterteilung: **06.04.2016**
(21) Anmeldenummer: 14001816.9
(22) Anmeldetag: 23.05.2014
(51) Int. Cl.: B21D 5/02, B21D 37/14

(54) **Werkzeugwechselvorrichtung für eine Umformpresse**
Tool changing device for a forming press
Dispositif de changement d'outil pour une presse de formage

(43) Veröffentlichungstag der Anmeldung: 25.11.2015
(73) Patentinhaber: Felder KG, 6060 Hall in Tirol (AT)
(72) Erfinder: Felder, Johann, 6060 Hall in Tirol (AT)
(74) Vertreter: Gangl, Markus

(56) Entgegenhaltungen:
- EP-A2- 0 377 865
- DE-A1- 19 643 163
- DE-U1- 29 705 509
- US-A- 5 791 852

## Beschreibung

Die Erfindung betrifft eine Werkzeugwechselvorrichtung für eine Umformpresse, insbesondere für eine Abkantpresse, mit wenigstens einem Werkzeugmagazin und wenigstens einer Übertragungsvorrichtung zur Übertragung der im wenigstens einen Werkzeugmagazin speicherbaren Umformwerkzeuge vom wenigstens einen Werkzeugmagazin zur Umformpresse und in umgekehrter Richtung, wobei die wenigstens eine Übertragungsvorrichtung eine antreibbare Schubkette zur Übertragung von Druck- und Zugkräften umfasst. Die Erfindung betrifft weiterhin eine Anordnung aus einer Umformpresse und einer erfindungsgemäßen Werkzeugwechselvorrichtung.

Umformpressen, wie z. B. Biege- oder Abkantpressen, werden in der Regel mit austauschbaren Werkzeugsätzen betrieben. Je nach Art des herzustellenden Werkstücks bzw. je nach Art des durchzuführenden Biegeschritts an einem Werkstück muss ein bestimmter Werkzeugsatz verwendet werden. Das Umrüsten der Werkzeugsätze erfolgt dabei meistens per Hand. Das ist jedoch nachteilig, da der Umrüstvorgang, insbesondere bei schweren Umformwerkzeugen, körperlich anstrengend ist. Außerdem erfordert er einen hohen Zeitaufwand, wodurch insbesondere die Fertigung kleiner und mittlerer Losgrößen teuer ist.

Es gibt Ansätze, den Umrüstprozess zu automatisieren. Dabei kommen Robotorarme oder verfahrbare Greifer zum Einsatz, um die Werkzeugsätze auszutauschen.

Derartige Lösungen sind allerdings technologisch sehr aufwendig und haben aufgrund des Arbeitsraums, den z.B. ein Roboterarm in Anspruch nimmt, einen hohen Platzbedarf.

Die US 5,791,852 beschreibt eine Lösung, bei der eine Schubkette zur Übertragung von Druck- und Zugkräften zum Einsatz kommt. Ein auszutauschendes Werkzeug wird dabei mittels der Schubkette über eine Verbindungsbrücke zu einer Presse gestoßen bzw. gezogen. Die Positionierung der Werkzeuge ist dabei allerdings ungenau, so dass sich die Lösung nicht für den Aufbau mehrteiliger Werkzeuge eignet.

Die EP 0 377 865 A2 beschreibt allgemeinen Stand der Technik. Bei der in dieser Schrift beschriebenen Lösung kommen Ketten zum Einsatz, die sich nicht zur Übertragung von Zug- und Druckkräften eignen.

Die Aufgabe der vorliegenden Erfindung besteht darin, die beschriebenen Nachteile unter Angabe einer gegenüber dem Stand der Technik verbesserten Werkzeugwechselvorrichtung bzw. einer Anordnung aus einer Umformpresse und einer solchen Werkzeugwechselvorrichtung zu vermeiden.

Diese Aufgabe wird durch die Merkmale des unabhängigen Anspruchs 1 gelöst.

Es ist also erfindungsgemäß vorgesehen, dass die die Schubkette wenigstens eine Koppelungsvorrichtung zur temporären Koppelung eines Umformwerkzeugs an die Schubkette umfasst und ein Messsystem zur, vorzugsweise fortlaufenden, Bestimmung der Position der Koppelungsvorrichtung bzw. eines mit der Koppelungsvorrichtung gekoppelten Umformwerkzeugs vorgesehen ist.

Durch das Vorsehen einer Schubkette wird eine äußerst zuverlässige und präzise arbeitende Übertragungsvorrichtung realisiert. Außerdem kann die Werkzeugwechselvorrichtung sehr kompakt gebaut werden.

Das Messsystem kann in die Koppelungsvorrichtung integriert sein. Alternativ oder ergänzend dazu kann auch ein Messsystem vorgesehen sein, dass sich nicht mit der Koppelungsvorrichtung mitbewegt, sondern an einem in Bezug auf die Werkzeugwechselvorrichtung bzw. in Bezug auf die Umformpresse positionsfesten Bauteil angeordnet ist und die Position der Koppelungseinheit bzw. eines mit der Koppelungseinheit gekoppelten Umformwerkzeugs z.B. optisch erfasst.

Erfordert die Koppelungsvorrichtung die Versorgung mit elektrischer Energie bzw. die Weiterleitung von Signalen zur bzw. von der Koppelungsvorrichtung, so ist es weiterhin vorteilhaft, wenn die Schubkette aus Kettengliedern gebildet ist, die Ausnehmungen zur Aufnahme von, vorzugsweise elektrischen, Leitungen aufweisen. In diesem Fall überträgt die Schubkette also nicht nur Druck- und Zugkräfte, sondern eben z.B. auch elektrische Energie.

Als günstig hat es sich erwiesen, dass die Schubkette über wenigstens eine Antriebsvorrichtung antreibbar ist, wobei die wenigstens eine Antriebsvorrichtung bevorzugt wenigstens ein Paar, besonders bevorzugt zwei Paare, von Antriebswellen umfasst. Dabei kann es vorgesehen sein, dass die Kraftübertragung von der wenigstens einen Antriebsvorrichtung auf die Schubkette über einen Reibschluss und/oder über einen Formschluss erfolgt. Weiterhin kann es vorgesehen sein, dass die Antriebswellen (zur Erhöhung des Reibschlusses) beschichtet sind, und/oder Anpresskräfte der Antriebswellen an die Schubkette mittels wenigstens einer Einstelleinrichtung, die vorzugsweise wenigstens eine Feder umfasst, verstellbar sind.

Ein weiterer Vorteil der Verwendung einer Schubkette besteht darin, dass sie sich äußerst kompakt speichern lässt. Hierzu ist es gemäß einem vorteilhaften Ausführungsbeispiel der Erfindung vorgesehen, dass die Werkzeugwechselvorrichtung wenigstens einen, vorzugsweisen spiralförmig ausgebildeten, Kettenspeicher zur Speicherung der Schubkette umfasst.

Um die Werkzeugwechselvorrichtung flexibel an unterschiedliche Umformpressen anpassen zu können, kann es weiterhin vorgesehen sein, dass das wenigstens eine Werkzeugmagazin höhenverstellbar und/oder seitenverstellbar zur Anpassung der Höhenlage bzw. Seitenlage des wenigstens einen Werkzeugmagazins an die Umformpresse ausgebildet ist.

Als vorteilhaft hat es sich herausgestellt, dass das wenigstens eine Werkzeugmagazin eine antreibbare, drehbar gelagerte, und in Gebrauchslage vorzugsweise horizontal ausgerichtete, Scheibe mit Aufnahmemitteln zur Aufnahme der Umformwerkzeuge umfasst, wobei die Aufnahmemittel besonders bevorzugt derart ausgebildet sind, dass die Umformwerkzeuge bei einer Drehung der Scheibe fixiert sind. Die Fixierung kann dabei z. B. durch eine Verklemmung erfolgen. Um die Speicherkapazität zu erhöhen, können mehrere derartige Scheiben, deren Höhenlagen, vorzugsweise automatisch, verstellbar sind, vorgesehen sein.

Da eine Umformpresse, wie z. B. eine Abkantpresse, zwei verschiedene Arten von Umformwerkzeugen erfordert, nämlich zum einen Stempelwerkzeuge und zum anderen Gegenwerkzeuge für die Stempelwerkzeuge, hat es sich als vorteilhaft erwiesen, dass die Werkzeugwechselvorrichtung wenigstens ein erstes Werkzeugmagazin zur Speicherung der Stempelwerkzeuge und wenigstens ein zweites Werkzeugmagazin zur Speicherung der Gegenwerkzeuge für die Stempelwerkzeuge umfasst, wobei die Werkzeugmagazine in Gebrauchslage vorzugsweise übereinander angeordnet sind.

Diese Ausgestaltung der Erfindung kann in günstiger Weise dadurch weitgebildet werden, dass die Werkzeugwechselvorrichtung eine erste Übertragungsvorrichtung zur Übertragung der im ersten Werkzeugmagazin speicherbaren Umformwerkzeuge vom ersten Werkzeugmagazin zur Umformpresse und in umgekehrter Richtung sowie eine zweite Übertragungsvorrichtung zur Übertragung der im zweiten Werkzeugmagazin speicherbaren Umformwerkzeuge vom zweiten Werkzeugmagazin zur Umformpresse und in umgekehrter Richtung umfasst, wobei vorzugsweise beide Übertragungsvorrichtungen eine antreibbare Schubkette zur Übertragung von Druck- und Zugkräften umfassen. Die Idee hinter dieser Ausgestaltung besteht also darin, dass die Stempelwerkzeuge sowie die Gegenwerkzeuge für die Stempelwerkzeuge gleichzeitig und unabhängig voneinander von dem jeweiligen Werkzeugmagazin zur Umformpresse und in umgekehrter Richtung übertragen werden können. Dadurch lässt sich die für den Umrüstprozess benötigte Zeit weiter reduzieren.

Um ein vollautomatisches Umrüsten in vorteilhafter Weise realisieren zu können, kann es vorgesehen sein, dass ein Steuerungssystem zur Steuerung der Werkzeugwechselvorrichtung, vorzugsweise zur vollautomatischen Übertragung der im wenigstens einen Werkzeugmagazin speicherbaren Umformwerkzeuge vom wenigstens einen Werkzeugmagazin zur Umformpresse und in umgekehrter Richtung gemäß einem vorbestimmten Programm, vorgesehen ist, wobei das Steuerungssystem vorzugsweise wenigstens einen Prozessor und/oder einen Speicher zur Speicherung eines Programms umfasst. Läuft der Umrüstprozess vollautomatisch gemäß einem vorbestimmten Programm ab, so ist es nicht mehr erforderlich, dass sich eine Bedienperson in unmittelbarer Nähe der Werkzeugwechselvorrichtung bzw. der Umformpresse aufhält. Hierdurch lässt sich die Sicherheit für das Bedienpersonal erhöhen.

Unterstützend kann die Sicherheit dadurch erhöht werden, dass ein Detektionssystem zur Detektion eines sich in der Nähe der Werkzeugwechselvorrichtung befindlichen Objekts, vorzugsweise einer Bedienperson, vorgesehen ist. Auf diese Weise kann sichergestellt werden, dass sich niemand im Gefahrenbereich der Werkzeugwechselvorrichtung bzw. der Umformpresse während des Umrüstvorgangs aufhält. Vorteilhafterweise umfasst das Detektionssystem Lasermittel, wie z. B. Lichtschranken oder dergleichen, die während des Umrüstvorgangs aktiv sind und bei Detektion eines Objekts eine sofortige Unterbrechung des Umrüstvorgangs bewirken.

Und schließlich kann es gemäß einem vorteilhaften Ausführungsbeispiel der Erfindung vorgesehen sein, dass die Werkzeugwechselvorrichtung wenigstens eine Vorrichtung zur Anbindung der Werkzeugwechselvorrichtung an die Umformpresse umfasst, wobei diese Vorrichtung vorzugsweise eine Führung für die Schubkette und/oder damit verbundene Elemente aufweist.

Schutz wird auch begehrt für eine Anordnung aus einer Umformpresse und einer erfindungsgemäßen Werkzeugwechselvorrichtung sowie für die Verwendung einer Schubkette zur Übertragung von Druck- und Zugkräften in einer erfindungsgemäßen Werkzeugwechselvorrichtung.

Weitere Einzelheiten und Vorteile der vorliegenden Erfindung werden anhand der Figurenbeschreibung unter Bezugnahme auf die Zeichnungen im Folgenden näher erläutert. Dabei zeigt:
- Fig. 1: eine Anordnung aus einer erfindungsgemäßen Werkzeugwechselvorrichtung und einer Umformpresse in Form einer Abkantpresse,
- Fig. 2: einen Ausschnitt der erfindungsgemäßen Werkzeugwechselvorrichtung,
- Fig. 3: einen Ausschnitt der Schubkette in einer perspektivischen schematischen Ansicht,
- Fig. 4: eine Draufsicht auf die Schubkette,
- Fig. 5: die mit der Schubkette verbundene Koppelungsvorrichtung zur temporären Koppelung eines Umformwerkzeugs an die Schubkette, und
- Fig. 6: eine Antriebsvorrichtung für die Schubkette.

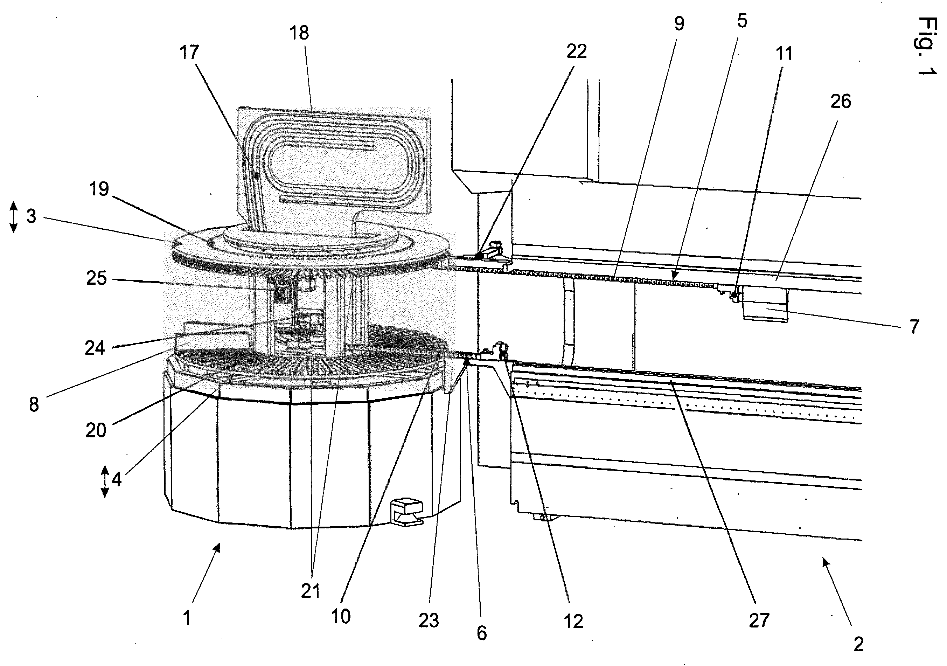

Figur 1 zeigt eine Anordnung aus einer Umformpresse 2 in Form einer Abkantpresse und einer Werkzeugwechselvorrichtung 1, die in unmittelbarer Nachbarschaft zu der Umformpresse 2, in diesem Falle neben der Umformpresse 2, aufgestellt ist.

Die Werkzeugwechselvorrichtung 1 umfasst ein erstes Werkzeugmagazin 3 zur Speicherung von Stempelwerkzeugen 7 und ein zweites Werkzeugmagazin 4 zur Speicherung von Gegenwerkzeugen 8 für die Stempelwerkzeuge 7, wobei die beiden Werkzeugmagazine 3 und 4 in Gebrauchslage übereinander angeordnet sind.

Jedes der Werkzeugmagazine 3 bzw. 4 weist eine antreibbare, drehbar gelagerte und in Gebrauchlage horizontal ausgerichtete Scheibe 19 bzw. 20 mit Aufnahmemitteln 21 zur Aufnahme der Umformwerkzeuge 7 und 8 auf, wobei diese Aufnahmemittel 21 derart ausgebildet sind, dass die Umformwerkzeuge 7 und 8 bei einer Drehung der Scheibe 19 bzw. 20 fixiert sind.

In der Figur 1 ist die Antriebsvorrichtung 25 für das erste, d. h. obere Werkzeugmagazin 3 zur Speicherung der Stempelwerkzeuge 7 zu sehen. Die Antriebsvorrichtung für das zweite Werkzeugmagazin 4 ist im Gehäuse der Werkzeugwechselvorrichtung 1 unterhalb des zweiten Werkzeugmagazins 4 zur Speicherung der Gegenwerkzeuge 8 für die Stempelwerkzeuge 7 angeordnet und damit nicht sichtbar.

Die beiden Werkzeugmagazine 3 und 4 sind höhenverstellbar ausgebildet, sodass die Höhenlage der Werkzeugmagazine 3 und 4 in einfacher Weise in Bezug auf die Umformpresse 2 angepasst werden kann.

Die Werkzeugwechselvorrichtung 1 umfasst eine erste Übertragungsvorrichtung 5 zur Übertragung der im ersten Werkzeugmagazin 3 speicherbaren Umformwerkzeuge 7 vom ersten Werkzeugmagazin 3 zur Umformpresse 2 und in umgekehrter Richtung, sowie eine zweite Übertragungsvorrichtung 6 zur Übertragung der im zweiten Werkzeugmagazin 4 speicherbaren Umformwerkzeuge 8 vom zweiten Werkzeugmagazin 4 zur Umformpresse 2 und in umgekehrter Richtung. Die beiden Übertragungsvorrichtungen 5 und 6 weisen eine antreibbare Schubkette 9 bzw. 10 zur Übertragung von Druck- und Zugkräften auf.

Außerdem umfasst jede der beiden Schubketten 9 und 10 eine Koppelungsvorrichtung 11 bzw. 12 zur temporären Koppelung eines Umformwerkzeuges 7 bzw. 8 an die Schubkette 9 bzw. 10, wobei diese Koppelungsvorrichtung 11 bzw. 12 im dargestellten Ausführungsbeispiel an einem ersten Ende der Schubkette 9 bzw. 10 angeordnet ist.

Die Schubketten 9 und 10 sind, ausgehend von einem zweiten Ende, jeweils in einem spiralförmig ausgebildeten Kettenspeicher 17 bzw. 18, der im oberen Bereich der Werkzeugwechselvorrichtung 1 angeordnet ist, speicherbar.

Bei dem dargestellten Ausführungsbeispiel ist es also vorgesehen, dass zwei unabhängige voneinander arbeitende Schubketten 9 und 10 zur Übertragung einerseits der Stempelwerkzeuge 7 und andererseits der Gegenwerkzeuge 8 für die Stempelwerkzeuge 7 vorgesehen sind. Alternativ ist es auch denkbar, dass nur eine Schubkette vorgesehen ist, wobei der mittlere Teil der Schubkette in einem Puffer zwischengespeichert wird. Auch bei einer derartigen Konfiguration könnten die beiden Enden der Schubkette unabhängig voneinander arbeiten.

Die Werkzeugwechselvorrichtung 1 ist über zwei Vorrichtungen 22 und 23 an die Umformpresse 2 angebunden, wobei die beiden Vorrichtungen 22 und 23 jeweils eine Führung für die Schubkette 9 bzw. 10 und/oder damit verbundene Elemente aufweisen. Im dargestellten Ausführungsbeispiel ist jeweils eines der Werkzeugmagazine 3 bzw. 4, eine der Vorrichtungen 22 bzw. 23 zur Anbindung der Werkzeugwechselvorrichtungen 1 an die Umformpresse 2 sowie einer der Klemmbalken 26 bzw. 27 der Abkantpresse 2 in einer gleichen Höhe angeordnet, sodass die Übertragung der Umformwerkzeuge 7 bzw. 8 zwischen den Werkzeugmagazinen 3 und 4 und der Umformpresse 2 jeweils in einer horizontalen Ebene erfolgt.

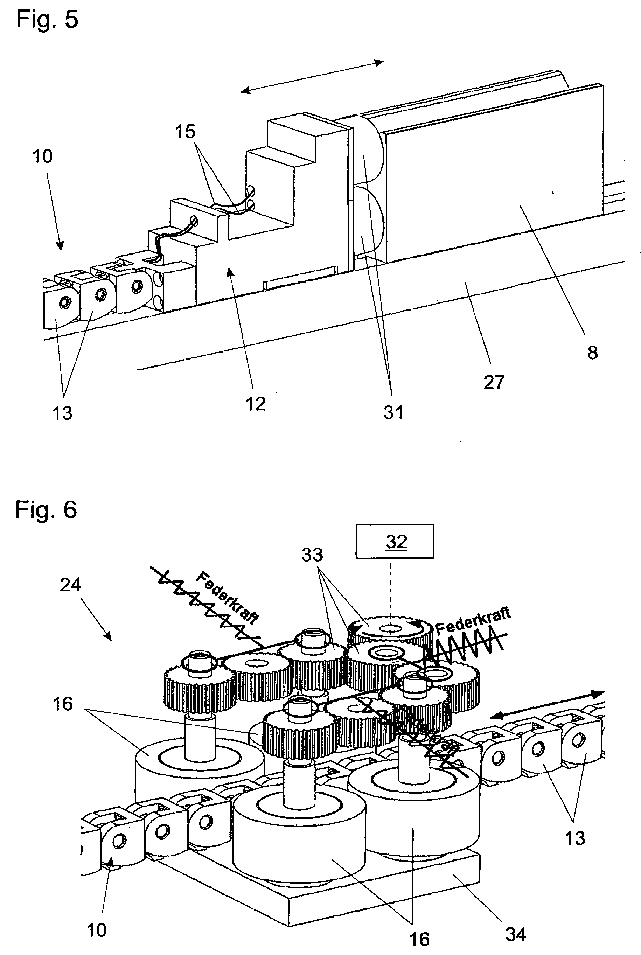

In Figur 1 ist auch die Antriebsvorrichtung 24 für die untere Schubkette 10 schematisch dargestellt. Details dieser Antriebsvorrichtung 24 werden im Zuge der Beschreibung der Figur 6 näher erläutert.

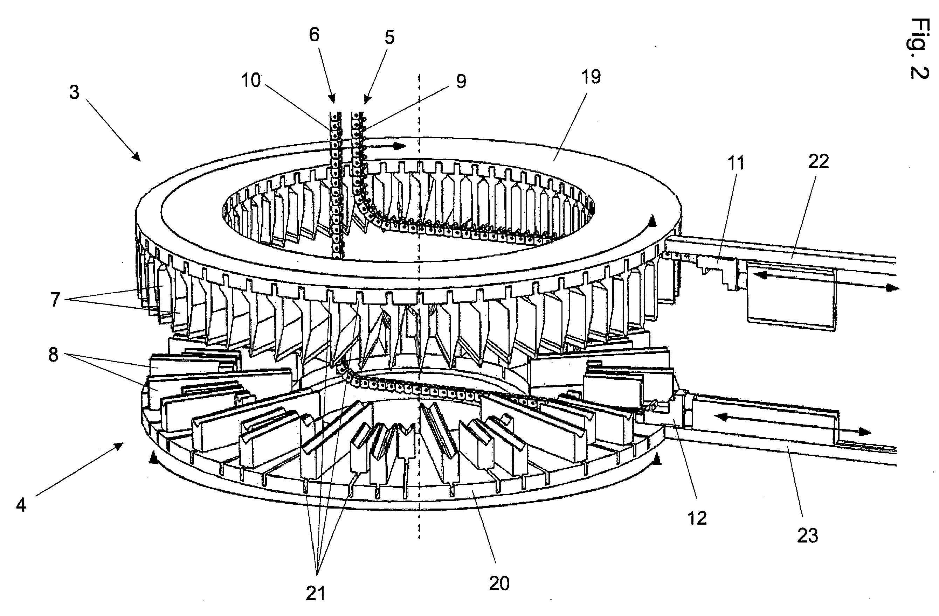

Figur 2 zeigt einen vergrößerten Ausschnitt der Werkzeugwechselvorrichtung. Diese Figur zeigt insbesondere die beiden Werkzeugmagazine 3 und 4 in Form der drehbar gelagerten Scheiben 19 und 20, auf denen die Stempelwerkzeuge 7 und die Gegenwerkzeuge 8 für die Stempelwerkzeuge 7 angeordnet sind. Die beiden Scheiben 19 und 20 weisen nutförmige Aufnahmemittel 21 zur Aufnahme der Umformwerkzeuge 7 und 8 auf, wobei diese Aufnahmemittel 21 derart ausgebildet sind, dass die Umformwerkzeuge 7 und 8 bei einer Drehung der Scheibe 19 bzw. 20 fixiert sind. Sobald die Scheiben 19 bzw. 20 zum Stillstand kommen, wird die Fixierung gelöst und das jeweils benötigte Umformwerkzeug 7 bzw. 8 kann aus der Aufnahmenut über die Vorrichtung 22 bzw. 23 zur Anbindung der Werkzeugwechselvorrichtung an die Umformpresse mittels der jeweiligen Schubkette 9 bzw. 10 auf den oberen bzw. unteren Klemmbalken der Abkantpresse geschoben werden.

Anhand der Figur 2 ist auch gut erkennbar, dass die Scheiben 19 und 20 der Werkzeugmagazine 3 und 4 bei diesem Ausführungsbeispiel jeweils eine mittige Ausnehmung aufweisen, wobei die Schubketten 9 und 10 durch zumindest eine der Ausnehmungen - in diesem Fall durch die Ausnehmung der Scheibe 19 des ersten Werkzeugmagazins 3 - zu den Kettenspeichern geführt werden.

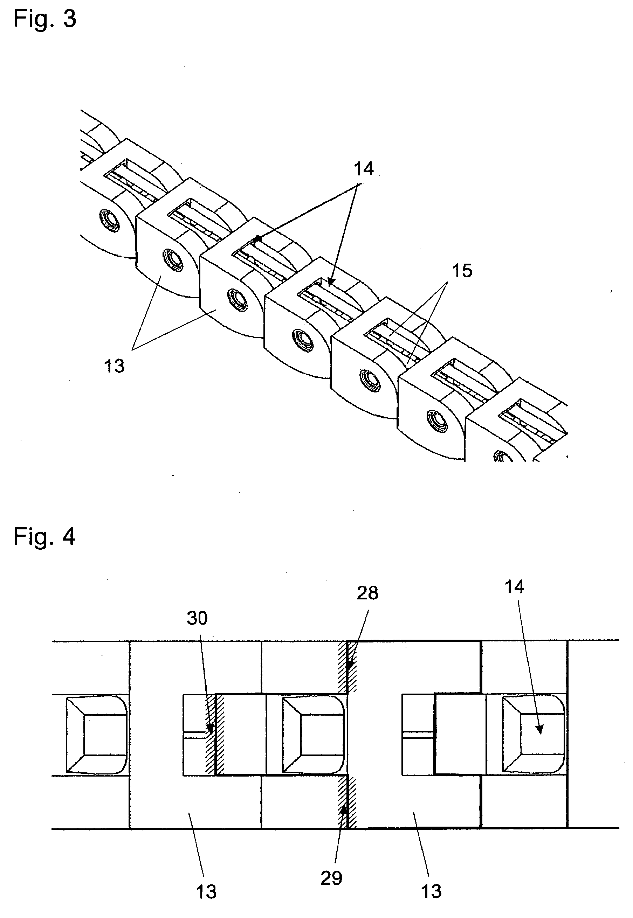

Aus der Figur 3 geht hervor, dass die Schubketten aus einzelnen Kettengliedern 13 gebildet sind, wobei die Kettenglieder 13 Ausnehmungen 14 zur Aufnahme von, vorzugsweise elektrischen, Leitungen 15 aufweisen. Mit Hilfe der Schubketten lassen sich also nicht nur Druck- und Zugkräfte, sondern - im Fall elektrischer Leitungen - auch elektrische Signale übermitteln.

Wie anhand der Figur 4 erkennbar ist, erfolgt die Übertragung der Druck- und Zugkräfte über drei Anlageflächen 28, 29 und 30, die zwischen zwei benachbarten Kettengliedern 13 ausgebildet sind.

Figur 5 zeigt in einem vergrößerten Ausschnitt die Koppelungsvorrichtung 12 zur temporären Koppelung eines Umformwerkzeuges 8 an das Ende der Schubkette 10. In dem dargestellten Ausführungsbeispiel erfolgt die Koppelung über Koppelelemente 31 in Form von Elektromagneten. Die Stromversorgung der Elektromagnete wird über Leitungen 15 sichergestellt. Alternativ oder ergänzend kann natürlich auch ein elektrisches Speichermedium zur Sicherstellung der Stromversorgung vorgesehen sein.

Die Koppelungsvorrichtung 12 umfasst auch ein Messsystem zur Bestimmung der Position der Koppelungsvorrichtung 12, über welches die Position der Koppelungsvorrichtung 12 und damit die Position des an die Kopplungsvorrichtung 12 gekoppelten Umformwerkzeugs 8 in Bezug auf die Umformpresse bzw. die Werkzeugwechselvorrichtung bestimmt werden kann. Alternativ oder ergänzend kann ein Messsystem vorgesehen sein, dass sich nicht mit der Koppelungsvorrichtung mitbewegt, sondern in Bezug auf die Werkzeugwechselvorrichtung bzw. in Bezug auf die Umformpresse ortsfest angeordnet ist und die Position der Koppelungsvorrichtung bzw. die Position eines mit der Koppelungsvorrichtung gekoppelten Umformwerkzeugs durch z.B. optische Mittel erfasst. Die Kommunikation mit dem Messsystem kann dabei - wie im dargestellten Fall - über Signalleitungen, die in die Schubkette 10 integriert sind, und/oder drahtlos, z.B. per Funk, erfolgen.

In dem dargestellten Ausführungsbeispiel werden die Schubketten jeweils über eine Antriebsvorrichtung angetrieben, wobei die Antriebsvorrichtung 24 für die untere Schubkette 10 schematisch in Figur 6 dargestellt ist. Es ist erkennbar, dass die Antriebsvorrichtung 24 zwei hintereinander angeordnete Paare von Antriebswellen 16 umfasst. Die Kraftübertragung von den Antriebswellen 16 auf die Schubkette 10 erfolgt dabei über einen Reibschluss, wobei zur Erhöhung des Reibschlusses die Antriebswellen 16 beschichtet sind.

Darüber hinaus sind die Anpresskräfte der Antriebswellen 16 an die Schubkette 10 mittels Einstelleinrichtungen, die Federn umfassen, verstellbar. Durch die Federbelastung werden konstante Anpresskräfte der Antriebswellen 16 an die Schubkette 10 erzeugt - selbst dann, wenn an den Antreibswellen 16 und/oder an der Schubkette 10 Verschleißerscheinungen auftreten.

Angetrieben werden die Antriebswellen 16 von einem Motor 32 in Form eines Servomotors, wobei zwischen dem Motor 32 und den Antriebswellen 16 eine Getriebevorrichtung mit mehreren Zahnrädern 33 vorgesehen ist. Die Antriebsvorrichtung 24 umfasst weiterhin ein Gehäuse 34.

Eine weitere Möglichkeit, die Schubkette anzutreiben besteht darin, eine Antriebsvorrichtung vorzusehen, welche Antriebsräder und/oder Antriebsscheiben umfasst, die formschlüssig in die Schubkette eingreifen.

## Patentansprüche

1. Werkzeugwechselvorrichtung (1) für eine Umformpresse (2), insbesondere für eine Abkantpresse, mit wenigstens einem Werkzeugmagazin (3, 4) und wenigstens einer Übertragungsvorrichtung (5, 6) zur Übertragung der im wenigstens einen Werkzeugmagazin (3, 4) speicherbaren Umformwerkzeuge (7, 8) vom wenigstens einen Werkzeugmagazin (3, 4) zur Umformpresse (2) und in umgekehrter Richtung, wobei die wenigstens eine Übertragungsvorrichtung (5, 6) eine antreibbare Schubkette (9, 10) zur Übertragung von Druck- und Zugkräften umfasst, **dadurch gekennzeichnet, dass** die Schubkette (9, 10) wenigstens eine Koppelungsvorrichtung (11, 12) zur temporären Koppelung eines Umformwerkzeugs (7, 8) an die Schubkette (9, 10) umfasst und ein Messsystem zur, vorzugsweise fortlaufenden, Bestimmung der Position der Koppelungsvorrichtung (11, 12) bzw. eines mit der Koppelungsvorrichtung (11,12) gekoppelten Umformwerkzeugs (7, 8) vorgesehen ist.

2. Werkzeugwechselvorrichtung (1) nach Anspruch 1, wobei die Schubkette (9, 10) aus Kettengliedern (13) gebildet ist, die Ausnehmungen (14) zur Aufnahme von, vorzugsweise elektrischen, Leitungen (15) aufweisen.

3. Werkzeugwechselvorrichtung (1) nach Anspruch 1 oder 2, wobei die Schubkette (9, 10) über wenigstens eine Antriebsvorrichtung (24) antreibbar ist, wobei die wenigstens eine Antriebsvorrichtung (24) bevorzugt wenigstens ein Paar, besonders bevorzugt zwei Paare, von Antriebswellen (16) umfasst.

4. Werkzeugwechselvorrichtung (1) nach Anspruch 3, wobei die Kraftübertragung von der wenigstens einen Antriebsvorrichtung (24) auf die Schubkette (9, 10) über einen Reibschluss und/oder über einen Formschluss erfolgt.

5. Werkzeugwechselvorrichtung (1) nach Anspruch 3 oder 4, wobei die Antriebswellen (16) beschichtet sind, und/oder Anpresskräfte der Antriebswellen (16) an die Schubkette (9, 10) mittels wenigstens einer Einstelleinrichtung, die vorzugsweise wenigstens eine Feder umfasst, verstellbar sind.

6. Werkzeugwechselvorrichtung (1) nach einem der Ansprüche 1 bis 5, wobei die Werkzeugwechselvorrichtung (1) wenigstens einen, vorzugsweise spiralförmig ausgebildeten, Kettenspeicher (17, 18) zur Speicherung der Schubkette (9, 10) umfasst.

7. Werkzeugwechselvorrichtung (1) nach einem der Ansprüche 1 bis 6, wobei das wenigstens eine Werkzeugmagazin (3, 4) höhenverstellbar und/oder seitenverstellbar zur Anpassung der Höhenlage bzw. Seitenlage des wenigstens einen Werkzeugmagazins (3, 4) an die Umformpresse (2) ausgebildet ist.

8. Werkzeugwechselvorrichtung (1) nach einem der Ansprüche 1 bis 7, wobei das wenigstens eine Werkzeugmagazin (3, 4) eine antreibbare, drehbar gelagerte, und in Gebrauchslage.vorzugsweise horizontal ausgerichtete, Scheibe (19, 20) mit Aufnahmemitteln (21) zur Aufnahme der Umformwerkzeuge (7, 8) umfasst, wobei die Aufnahmemittel (21) bevorzugt derart ausgebildet sind, dass die Umformwerkzeuge (7, 8) bei einer Drehung der Scheibe (19, 20) fixiert sind.

9. Werkzeugwechselvorrichtung (1) nach einem der Ansprüche 1 bis 8, wobei die Werkzeugwechselvorrichtung (1) wenigstens ein erstes Werkzeugmagazin (3) zur Speicherung von Stempelwerkzeugen (7) und wenigstens ein zweites Werkzeugmagazin (4) zur Speicherung von Gegenwerkzeugen (8) für die Stempelwerkzeuge (7) umfasst, und wobei die Werkzeugmagazine (3, 4) in Gebrauchslage vorzugsweise übereinander angeordnet sind.

10. Werkzeugwechselvorrichtung (1) nach Anspruch 9, wobei die Werkzeugwechselvorrichtung (1) eine erste Übertragungsvorrichtung (5) zur Übertragung der im ersten Werkzeugmagazin (3) speicherbaren Umformwerkzeuge (7) vom ersten Werkzeugmagazin (3) zur Umformpresse (2) und in umgekehrter Richtung sowie eine zweite Übertragungsvorrichtung (6) zur Übertragung der im zweiten Werkzeugmagazin (4) speicherbaren Umformwerkzeuge (8) vom zweiten Werkzeugmagazin (4) zur Umformpresse (2) und in umgekehrter Richtung umfasst, und wobei vorzugsweise beide Übertragungsvorrichtungen (5, 6) eine antreibbare Schubkette (9, 10) zur Übertragung von Druck- und Zugkräften umfassen.

11. Werkzeugwechselvorrichtung (1) nach einem der Ansprüche 1 bis 10, wobei ein Steuerungssystem zur Steuerung der Werkzeugwechselvorrichtung (1), vorzugsweise zur vollautomatischen Übertragung der im wenigstens einen Werkzeugmagazin (3, 4) speicherbaren Umformwerkzeuge (7, 8) vom wenigstens einen Werkzeugmagazin (3, 4) zur Umformpresse (2) und in umgekehrter Richtung gemäß einem vorbestimmten Programm, vorgesehen ist, und wobei das Steuerungssystem vorzugsweise wenigstens einen Prozessor und/oder einen Speicher zur Speicherung eines Programms umfasst.

12. Werkzeugwechselvorrichtung (1) nach einem der Ansprüche 1 bis 11, wobei ein Detektionssystem zur Detektion eines sich in der Nähe der Werkzeugwechselvorrichtung (1) befindlichen Objekts, vorzugsweise einer Bedienperson, vorgesehen ist, und wobei das Detektionssystem (1) bevorzugt Lasermittel umfasst.

13. Werkzeugwechselvorrichtung (1) nach einem der Ansprüche 1 bis 12, wobei die Werkzeugwechselvorrichtung (1) wenigstens eine Vorrichtung (22, 23) zur Anbindung der Werkzeugwechselvorrichtung (1) an die Umformpresse (2) umfasst, und wobei diese Vorrichtung (22, 23) vorzugsweise eine Führung für die Schubkette (9, 10) und/oder damit verbundene Elemente aufweist.

14. Anordnung aus einer Umformpresse (2) und einer Werkzeugwechselvorrichtung (1) nach einem der Ansprüche 1 bis 13.

15. Verwendung einer Schubkette (9, 10) zur Übertragung von Druck- und Zugkräften in einer Werkzeugwechselvorrichtung (1) nach einem der Ansprüche 1 bis 13.

## Claims

1. Tool changing apparatus (1) for a forming press (2), in particular for a press brake, with at least one tool magazine (3, 4) and at least one transfer device (5, 6) for transferring the forming tools (7, 8) which can be stored in the at least one tool magazine (3, 4) from the at least one tool magazine (3, 4) to the forming press (2) and in the reverse direction, wherein the at least one transfer device (5, 6) comprises a drivable push-pull chain (9, 10) for transferring pressure and tensile forces, **characterised in that** the push-pull chain (9, 10) comprises at least one coupling device (11, 12) for temporarily coupling a forming tool (7, 8) to the push-pull chain (9, 10) and a measuring system for the, preferably continuous, determination of the position of the coupling device (11, 12) or of a forming tool (7, 8) coupled with the coupling device (11, 12).

2. Tool changing apparatus (1) according to claim 1, wherein the push-pull chain (9, 10) is formed of chain links (13) which possess openings (14) designed to accommodate lines, preferably electrical cables (15).

3. Tool changing apparatus (1) according to claim 1 or 2, wherein the push-pull chain (9, 10) can be driven by at least one drive mechanism (24), wherein the at least one drive mechanism (24) preferably comprises at least one pair, particularly preferably two pairs, of drive shafts (16).

4. Tool changing apparatus (1) according to claim 3, wherein the transmission of force from the at least one drive mechanism (24) to the push-pull chain (9, 10) is effected by means of a frictional connection and/or by means of a form-locking connection.

5. Tool changing apparatus (1) according to claim 3 or 4, wherein the drive shafts (16) are coated, and/or pressure forces applied by the drive shafts (16) to the push-pull chain (9, 10) can be adjusted by means of at least one adjusting mechanism which preferably comprises at least one spring.

6. Tool changing apparatus (1) according to one of the claims 1 to 5, wherein the tool changing apparatus (1) comprises at least one preferably spiral-formed chain store (17, 18) for storing the push-pull chain (9, 10).

7. Tool changing apparatus (1) according to one of the claims 1 to 6, wherein the at least one tool magazine (3, 4) is designed to be adjustable in height and/or laterally adjustable in order to adjust the height or lateral position of the at least one tool magazine (3, 4) to the forming press (2).

8. Tool changing apparatus (1) according to one of the claims 1 to 7, wherein the at least one tool magazine (3, 4) comprises a drivable, rotatably mounted and, in the position of use, preferably horizontally aligned disc (19, 20) with reception means (21) for receiving the forming tools (7, 8), wherein the reception means (21) are preferably designed such that the forming tools (7, 8) are fixed in place during a rotation of the disc (19, 20).

9. Tool changing apparatus (1) according to one of the claims 1 to 8, wherein the tool changing apparatus (1) comprises at least one first tool magazine (3) for storing stamping dies (7) and at least one second tool magazine (4) for storing counter dies (8) for the stamping dies (7), and wherein the tool magazines (3, 4) are, in the position of use, preferably arranged on top of one another.

10. Tool changing apparatus (1) according to claim 9, wherein the tool changing apparatus (1) comprises a first transfer device (5) for transferring the forming tools (7) which can be stored in the first tool magazine (3) from the first tool magazine (3) to the forming press (2) and in the reverse direction, as well as a second transfer device (6) for transferring the forming tools (8) which can be stored in the second tool magazine (4) from the second tool magazine (4) to the forming press (2) and in the reverse direction, and wherein both transfer devices (5, 6) preferably comprise a drivable push-pull chain (9, 10) for transferring pressure and tensile forces.

11. Tool changing apparatus (1) according to one of the claims 1 to 10, wherein a control system is provided for controlling the tool changing apparatus (1), preferably allowing the fully-automatic transfer of the forming tools (7, 8) which can be stored in the at least one tool magazine (3, 4) from at least one tool magazine (3, 4) to the forming press (2) and in the reverse direction according to a predetermined program, and wherein the control system preferably comprises at least one processor and/or a memory for storing a program.

12. Tool changing apparatus (1) according to one of the claims 1 to 11, wherein a detection system is provided in order to detect an object located in the vicinity of the tool changing apparatus (1), preferably an operating person, and wherein the detection system (1) preferably comprises laser means.

13. Tool changing apparatus (1) according to one of the claims 1 to 12, wherein the tool changing apparatus (1) comprises at least one device (22, 23) for connecting the tool changing apparatus (1) to the forming press (2), and wherein this device (22, 23) preferably possesses a guide for the push-pull chain (9, 10) and/or elements connected thereto.

14. Arrangement consisting of a forming press (2) and a tool changing apparatus (1) according to one of the claims 1 to 13.

15. Use of a push-pull chain (9, 10) for transferring pressure and tensile forces in a tool changing apparatus (1) according to one of the claims 1 to 13.

## Revendications

1. Dispositif de changement d'outil (1) pour une presse de formage (2), en particulier pour une presse plieuse, avec au moins un magasin d'outil (3, 4) et au moins un dispositif de transfert (5, 6) pour le transfert des outils de formage (7, 8) pouvant être stockés dans au moins un magasin d'outil (3, 4) d'au moins un magasin d'outil (3, 4) à la presse de formage (2) et inversement, l'au moins un dispositif de transfert (5, 6) comportant une chaîne de poussée (9, 10) pouvant être entraînée pour le transfert de forces de pression et de traction, **caractérisé en ce que** la chaîne de poussée (9, 10) comporte au moins un dispositif de couplage (11, 12) pour le couplage temporaire d'un outil de formage (7, 8) avec la chaîne de poussée (9, 10) et **en ce qu'**un système de mesure pour déterminer, de préférence en continu, la position du dispositif de couplage (11, 12) ou d'un outil de formage (7, 8) couplé au dispositif de couplage (11, 12) est prévu.

2. Dispositif de changement d'outil (1) selon la revendication 1, la chaîne de poussée (9, 10) étant formée de maillons de chaîne (13) qui présentent des évidements (14) pour la réception de câbles de préférence électriques (15).

3. Dispositif de changement d'outil (1) selon la revendication 1 ou 2, la chaîne de poussée (9, 10) pouvant être entraînée par le biais d'au moins un dispositif d'entraînement (24), l'au moins un dispositif d'entraînement (24) comportant de préférence au moins une paire, de manière particulièrement préférée deux paires d'arbres d'entraînement (16).

4. Dispositif de changement d'outil (1) selon la revendication 3, la transmission de force de l'au moins un dispositif d'entraînement (24) à la chaîne de poussée (9, 10) étant effectuée par une liaison par friction et/ou par une liaison de formes.

5. Dispositif de changement d'outil (1) selon la revendication 3 ou 4, les arbres d'entraînement (16) étant revêtus et/ou des forces de pressage des arbres d'entraînement (16) sur la chaîne de poussée (9, 10) étant réglables à l'aide d'au moins un dispositif de réglage qui comporte de préférence au moins un ressort.

6. Dispositif de changement d'outil (1) selon l'une quelconque des revendications 1 à 5, le dispositif de changement d'outil (1) comportant au moins un réservoir de chaîne (17, 18) réalisé de préférence en spirale pour le stockage de la chaîne de poussée (9, 10).

7. Dispositif de changement d'outil (1) selon l'une quelconque des revendications 1 à 6, l'au moins un magasin d'outil (3, 4) étant réalisé de manière réglable en hauteur et/ou réglable sur le côté pour l'adaptation de la position verticale ou de la position latérale de l'au moins un magasin d'outil (3, 4) à la presse de formage (2).

8. Dispositif de changement d'outil (1) selon l'une quelconque des revendications 1 à 7, l'au moins un magasin d'outil (3, 4) comportant un disque (19, 20) pouvant être entraîné, logé de manière rotative, et orienté en position d'utilisation de préférence horizontalement avec des moyens de réception (21) pour la réception des outils de formage (7, 8), les moyens de réception (21) étant réalisés de préférence de telle manière que les outils de formage (7, 8) soient fixés en cas de rotation du disque (19, 20).

9. Dispositif de changement d'outil (1) selon l'une quelconque des revendications 1 à 8, le dispositif de changement d'outil (1) comportant au moins un premier magasin d'outil (3) pour le stockage d'outils de poinçonnage (7) et au moins un second magasin d'outil (4) pour le stockage d'outils antagonistes (8) pour les outils de poinçonnage (7), et les magasins d'outil (3, 4) étant agencés en position d'utilisation de préférence l'un au-dessus de l'autre.

10. Dispositif de changement d'outil (1) selon la revendication 9, le dispositif de changement d'outil (1) comportant un premier dispositif de transfert (5) pour le transfert des outils de formage (7) pouvant être stockés dans le premier magasin d'outil (3) du premier magasin d'outil (3) à la presse de formage (2) et inversement, ainsi qu'un second dispositif de transfert (6) pour le transfert des outils de formage (8) pouvant être stockés dans le second magasin d'outil (4) du second magasin d'outil (4) à la presse de formage (2) et inversement, et de préférence les deux dispositifs de transfert (5, 6) comportant une chaîne de poussée (9, 10) pouvant être entraînée pour le transfert de forces de pression et de traction.

11. Dispositif de changement d'outil (1) selon l'une quelconque des revendications 1 à 10, un système de commande pour la commande du dispositif de changement d'outil (1), de préférence pour le transfert complètement automatique des outils de formage (7, 8) stockables dans au moins un magasin d'outil (3, 4) de l'au moins un magasin d'outil (3, 4) à la presse de formage (2) et inversement selon un programme prédéterminé étant prévu, et le système de commande comportant de préférence au moins un processeur et/ou une mémoire pour la mémorisation d'un programme.

12. Dispositif de changement d'outil (1) selon l'une quelconque des revendications 1 à 11, un système de détection étant prévu pour la détection d'un objet se trouvant à proximité du dispositif de changement d'outil (1), de préférence d'un opérateur, et le système de détection (1) comportant de préférence des moyens à laser.

13. Dispositif de changement d'outil (1) selon l'une quelconque des revendications 1 à 12, le dispositif de changement d'outil (1) comportant au moins un dispositif (22, 23) pour la liaison du dispositif de changement d'outil (1) à la presse de formage (2) et ce dispositif (22, 23) présentant de préférence un guidage pour la chaîne de poussée (9, 10) et/ou des éléments liés à celle-ci.

14. Agencement d'une presse de formage (2) et d'un dispositif de changement d'outil (1) selon l'une quelconque des revendications 1 à 13.

15. Utilisation d'une chaîne de poussée (9, 10) pour le transfert de forces de pression et de traction dans un dispositif de changement d'outil (1) selon l'une quelconque des revendications 1 à 13.
